(19) Europäisches Patentamt
European Patent Office
Office européen des brevets

(11) Veröffentlichungsnummer: **0 175 141**
**B1**

(12) # EUROPÄISCHE PATENTSCHRIFT

(45) Veröffentlichungstag der Patentschrift: **25.10.89**

(21) Anmeldenummer: **85110128.7**

(22) Anmeldetag: **13.08.85**

(51) Int. Cl.⁴: **A 01 N 43/90** // (A01N43/90, 43:90, 31:06, 31:02, 27:00)

(54) **Insektenlockstoff.**

(30) Priorität: **17.08.84 DE 3430211**

(43) Veröffentlichungstag der Anmeldung: **26.03.86 Patentblatt 86/13**

(45) Bekanntmachung des Hinweises auf die Patenterteilung: **25.10.89 Patentblatt 89/43**

(84) Benannte Vertragsstaaten: **AT BE CH DE FR GB IT LI LU NL SE**

(56) Entgegenhaltungen:
**EP-A-0 023 793**
**EP-A-0 028 818**
**EP-A-0 071 814**
**DE-A-2 800 479**
**DE-A-2 832 248**
**US-A-3 755 365**
**US-A-3 755 563**

**NATURWISSENSCHAFTEN, vol. 64, no. 11, Nov 1977, Berlin (DE); W.FRANCKE: "2-Ethyl-1,6-dioxaspiro(4.4)nonane, principal aggregation pheromone of Pytyogenes chalcographus (L.)", pp. 590-591**
**NATURWISSENSCHAFTEN, vol. 66, no. 12, Dec 1979, Berlin (DE); W.FRANCKE et al.: "Alkyl-1,6-dioxaspiro(4.5)-decanes. A new class of pheromones", pp. 618-619**
**NATURWISSENSCHAFTEN, vol. 58, no. 8, Aug 1971,**

(73) Patentinhaber: **SHELL INTERNATIONALE RESEARCH MAATSCHAPPIJ B.V., Carel van Bylandtlaan 30, NL-2596 HR Den Haag (NL)**

(72) Erfinder: **Vité, Jean Pierre, Prof., Siegelsbachstrasse 10, D-7800 Freiburg i.Br. (DE)**
Erfinder: **Adlung, Karl Günther, Dr. Dipl.-Landwirt, Finther Weg 7, D-6501 Budenheim (DE)**
Erfinder: **Becker, Peter H., Dr., Raiffeisenstrasse 3, D-6507 Ingelheim (DE)**
Erfinder: **Holtmann, Heinrich, Dr., Kaiser-Karl-Strasse 15, D-7535 Gau-Algesheim (DE)**
Erfinder: **Kauth, Hans-Herbert, Dr., Gehauweg 14, D-6507 Ingelheim (DE)**
Erfinder: **Mengel, Rudolf, Dr. Dipl.-Chem., Im Herzenacker 32, D-6535 Gau-Algesheim (DE)**

(74) Vertreter: **Bennett, David Arthur Horder, 4, York Road, London SE1 7NA (GB)**

(56) Entgegenhaltungen: (Fortsetzung)
**Berlin (DE); J.P.VITE et al.: "Inhibition of Dendroctonus frontalis response to frontalin by isomers of brevicomin", p. 418**
**CHEMIE DER PFLANZENSCHUTZ- UND SCHÄDLINGSBEKÄMPFUNGSMITTEL, vol. 6, 1981, R.Wegler, Berlin (DE); H.J.BESTMANN et al.: "Chemistry of insect pheromones", pp. 30-164**
**NATURWISSENSCHAFTEN, vol. 67, no. 3, March 1980, Berlin (DE); W.FRANCKE et al.: "The pheromone bouquet of Ipsamitinus", pp. 147-148**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 175 141 B1

LIBER, STOCKHOLM 1989

**Beschreibung**

Die Erfindung betrifft neue Kombinationen von Chalcogran mit anderen Stoffen, sowie deren Verwendung und Verfahren zur Überwachung und Bekämpfung rindenbrütender Schadinsekten.

Es ist bekannt, daß rinden- und holzbrütende Insekten chemische Signale ("Pheromone") abgeben, welche die Besiedlung ihrer Wirtsbäume steuern und daß diese Pheromone, die oft aus mehreren Komponenten bestehen, zur biotechhischem Bekämpfung dieser Schädlinge eingesetzt werden können.

Des weiteren ist bekannt, daß Chalcogran, ein Pheromon des Kupferstechers ("Pityogenes chalcographus"), eine schwache Lockwirkung auf Käfer dieser Art ausübt. Mit Chalcogran behandelte Rindenteile zeigen eine dem Naturbefall entsprechende Lockwirkung (G8-PS 1 592 409. W. Franke et al.; Naturwissenschaften; 64 590 (1977)).

Überraschenderweise kann die Lockwirkung des Chalcograns auf den P. chalcographus deutlich erhöht werden, wenn dem Chalcogran bestimmte Pheromonkomponenten anderer Borkenkäferarten beigegeben werden. Bevorzugt sind die Pheromonkomponenten solcher Borkenkäferarten, mit denen P. chalcographus vergesellschaftet ist.

Dies sind z. B. die Borkenkäfer Ips typographus, Ips amitinus, Polygraphus polygraphus oder Ips duplicatus, hervorzuheben ist der Ips typographus.

Die Erfindung betrifft somit Mittel zum Anlocken von Borkenkäfern, welche aus Chalcogran und cis-Verbenol und gegebenenfalls einem oder mehreren der in Tabelle I angegebenen Stoffe besteht, sowie die Verwendung dieser Kombinationen zum Anlocken von Borkenkäfern und Verfahren zur Anlockung von Borkenkäfern, insbesondere der Art P. chalcographus.

Tabelle I
Ips dienol
Ipsenol
Lineatin
Frontalin
Brevicomin
Amitinol
α-Pinen
1-Hexanol
2-Methyl-3-buten-2-ol

Der rationelle chemische Name und die Formel von Chalcogran und der in Tabelle I genannten Verbindungen sind auf einem gesonderten Formelblatt erläutert. Die Erfindung umfaßt die Kombination der genannten Verbindungen in der angegebenen Form, als reine Stereoisomere sowie deren Enantiomere und Gemische der möglichen stereoisomeren Formen.

Die Auswahl und das Mischungsverhältnis der Komponenten der erfindungsgemäßen Lockstoffkombination wird durch verschiedene Faktoren bestimmt, u.a. von:

- der Fangmethode (Landefalle, wie z. B. Norwegisches Kammrohr, Kanadischer Vieltrichter; Flugbarriere, wie z. B. Röchling-Flachtrichter, Theyson-Schlitzfalle; Köderung durch Fangbäume etc.)
- dem Fangzweck (Fang von P. chalcographus allein oder zusammen mit anderen Borkenkäferarten; Massenfang; Monitoring etc.)
- der angestrebten Wirkdauer
- der Art des Dispensers (Kapillardispenser; Röhrchen mit perforiertem Deckel; Polyethylenbeutel; direktes Aufsprühen auf Holz etc.).

Die Verwendung von Streck- und Lösungsmitteln erlaubt eine bessere Handhabung und Dosierung der Lockstoffkombinationen. Als Lösungs- bzw. Streckmittel seien beispielhaft genannt:

- gesättigte oder ungesättigte Kohlenwasserstoffe mit einem Siedepunkt bis zu 150° C, hervorzuheben sind die verschiedenen Pentane, Hexane, sowie Cyclohexan, Methylcyclohexan, Cyclohexen etc.
- Alkohole, wie Methanol, Ethanol sowie die isomeren Propanole, Butanole, Pentanole und Hexanole.
- cycl. Alkohole
- ungesättigte Alkohole
- Polyethylenglycole
- Vaseline
- kolloidale Kieselsäure.

Die Anwendung geschieht in an sich bekannter Weise, z. B. entsprechend der DE-OS-2 832 248.

Ferner kann die Lockstoffkombination in Pasten eingearbeitet und entsprechend der DE-OS-2 945 655 in Kunststoffbeutel verpackt eingesetzt werden. Die Kunststoffbeutel, vorzugsweise aus Polyethylen, haben im allgemeinen eine Wandstärke von 20 bis 200 µm und eine Oberfläche von etwa 80 bis 320 $cm^2$. Das Verhältnis der Komponenten in der Lockstoffkombination kann in weiteren Grenzen variiert werden. Ein hoher Anteil an Lösungsmittel ist im allgemeinen vorteilhaft.

Die Komponenten der erfindungsgemäßen Lockstoffkombination können auch auf mehrere Dispenser aufgeteilt werden. Dies ist insofern vorteilhaft, als z. B. bei der Verwendung von Kunstoffbeutel-Dispensern durch die Wahl verschiedener Folienstärken die Abgaberate der einzelnen Pheromonkomponenten aufeinander abgestimmt werden kann.

Die Erfindung umfaßt somit auch die Kombination verschiedener Dispenser, wobei auch Dispenser, welche kein Chalcogran enthalten, mit chalcogranhaltigen Dispensern kombiniert werden können.

Erfindungswesentlich ist, daß bei der Anwendung die Köderung der Borkenkäfer mittels eines Duftstoffbouquetts erreicht wird, in dem Chalcogran und cis-Verbenol und gegebenenfalls eine oder mehrere in der Tabelle I genannte Pheromone zusammenwirken.

Bevorzugt sind erfindungsgemäße Kombinationen von von einem Gewichtsteil Chalcogran mit

0,05 bis 20 Gewichtsteilen cis-Verbenol, Ipsdienol, Ipsenol, Lineatin, Frontalin, Brevicomin, Amitinol, α-Pinen und/oder

1,0 bis 500 Gewichtsteilen 1-Hexanol, 2- Methyl-3-buten-2-ol.

Hervorzuheben ist die Kombination von Chalcogran mit cis-Verbenol, Ipsdienol und 2-Methyl-3-buten-2-ol, sowie die Kombination von Chalcogran mit cis-Verbenol, Brevicomin und 1-Hexanol.

Besonders bevorzugt ist die Kombination Chalcogran/cis-Verbenol/Ipsdienol/2-Methyl-3-buten-2-ol im Gewichtsverhältnis (1 bis 10) : (1 bis 10) : (0,5 bis 5) : (50 bis 500) und die Kombination Chalcogran/cis-Verbenol/Brevicomin/l-Hexanol im Gewichtsverhältnis (1 bis 10) : (1 bis 10) : (1 bis 10) : (10 bis 100).

Häufig erweist es sich als günstig, flüchtige Inhaltsstoffe der Wirtsbäume mit den oben genanten Lockstoffkombinationen gemeinsam anzuwenden. Dies kann auf die einfachste Weise dadurch geschehen, daß z. B. Zweige, Holz- oder Rindenstücke in die Fallen gegeben werden oder daß entsprechende Extrakte den Lockstoffkombinationen beigemischt werden. Insbesondere zum Fang von P. chalcographus hat es sich bewährt, in der Nähe, vor allem unter der Falle, benadelte Fichtenreiser anzuhäufen.

Im folgenden werden einige konkrete Ausführungsformen der Erfindung beschrieben.

**Beispiel 1**

**Dispenser**

Eine 6 x 4 cm große und mehrere Millimeter dicke Zellstoffplatte wird mit einer Lösung von 5 mg Chalcogran, 70 mg cis-Verbenol, 10 mg Ipsdienol und 1500 mg Methylbutenol getränkt. Die Zellstoffplatte wird dann in eine Folie aus Hochdruckpolyethylen mit einer Wandstärke von 50 μm eingesiegelt, so daß ein rechteckiger Beutel mit einer Oberfläche von ca. 112 $cm^2$ entsteht.

**Beispiel 2**

**Dispenser mit Paste**

In Beutel der in Beispiel 1 angegebenen Art wird eine Paste aus 50 mg Chalcogran, 70 mg cis-Verbenol, 10 mg Ipsdienol, 2 000 mg Methylbutenol, 4 200 mg Lanogen 1 500 (Polyethylenglycol), 5 000 mg Vaseline und 550 mg Aerosil 200 (kolloidale Kieselsäure) gefüllt.

Die Überlegenheit der erfindungsgemäßen Kombinationen geht aus den folgenden Versuchsergebnissen hervor.

**Beispiel 3**

**Kombination von Chalcogran mit cis-Verbenol**

Zahl (n) der in Trichterfallen gefangenen P. chalcographus bei Köderung mit Chalcogran und Pheromonkomponenten des Ips typographus
(Freiburg-Kuppel, 9.5 - 28.5.1984)

| Köder | n |
|---|---|
| a) Chalcogran + Fichtenrinde | 307 |
| b) cis-Verbenol und Chalcogran (1 : 1) (Dispenser: Glasrohr mit Plastikklappe | 775 |

**Beispiel 4**

**Kombination von Chalcogran mit cis-Verbenol, Ipsdienol und 2-Methyl-3-buten-2-ol**

Durchschnittliche Zahl (n) und Extremwerte der mit baumstammsimulierenden Fallen gefandenen P. chalcographus, Versuchsdauer: 30 Minuten

| | Köder | n | Extremwerte |
|---|---|---|---|
| a) | Naturbefall* | 31.7 | (22 - 38) |
| b) | Chalcogran, cis-Verbenol Ipsdienol (1 : 1) in 2-Methyl-3-buten-2-ol (Dispenser : Glasrohr mit Plastikkappe) | 49.7 | (37 - 59) |

* Als Naturbefall werden ca 25 cm lange Fichtentriebe mit einem Durchmesser von etwa 1.8 cm und 20 bis 30 Einbohrungen des P. chalcographus ( ♂ ♂ ) verwendet.

**Beispiel 5**

- Kombination von Chalcrogran mit cis-Verbenol, Brevicomin und 1-Hexanol

Durchschnittliche Zahl (n) und Extremwerte der in kommerziellen Schlitzfallen gefangenen P. chalcographus, Versuchsdauer 30 Minuten

| | Köder | n | Extremwerte |
|---|---|---|---|
| a) | Chalcogran, cis-Verbenol, 1-Hexanol (1 : 1 : 10) | 17.3 | (10 - 25) |
| b) | Chalcogran, cis-Verbenol, Brevicomin, 1-Hexanol (1 : 1 : 1 : 10) | 29.8 | (21 - 43) |

**Beispiel 6**

**Kombination von Chalcogran mit cis-Verbenol, Ipsdienol und 2-Methyl-3-buten-2-ol**

Zahl (n) der in Theysson Flugfallen gefangenen P. chalcographus bei Köderung mit nach Beispiel 1 hergestellten Dispensern.

| | Köder | (n) |
|---|---|---|
| a) | cis-Verbenol (70 mg) Ipsdienol (10 mg) 2-Methyl-3-buten-2-ol (1500 mg) | 29 |
| b) | Chalcogran (5 mg), cis-Verbenol (70 mg) Ipsdienol (10 mg) 2-Methyl-3-buten-2-ol (1500 mg) | 1014 |

| | | |
|---|---|---|
| c) | Chalcogran (50 mg)<br>cis-Verbenol (70 mg)<br>Ipsdienol (10 mg)<br>2-Methyl-3-buten-2-ol<br>(1500 mg) | 1580 |

**Beispiel 7**

**Kombination von Chalcogran mit cis-Verbenol, Ipsdienol und 2-Methyl-3-buten-2-ol**

Zahl (n) der in Trichterfallen gefandenen P. chalcographus bzw. Ips typographus bei Köderung mit nach Beispiel 1 hergestellten Dispensern.

| | Köder | P.chalcographus | I. typographus |
|---|---|---|---|
| a) | Chalcogran (5 mg)<br>2-Methyl-3-buten-2-ol<br>(2000 mg) | 34 | 21 |
| b) | Chalcogran (5 mg)<br>cis-Verbenol (70 mg)<br>Ipsdienol (10 mg)<br>2-Methyl-3-buten-2-ol<br>(1500 mg)<br>n-Hexan (1 ml) | 896 | 1056 |

**Beispiel 8**

**Kombination von Chalcogran mit cis-Verbenol, 2-Methyl-3-buten-2-ol und α-Pinen**

Zahl (n) der in Theyson-Schlitzfallen gefangenen P. chalcographus bei Köderung mit nach Beispiel 1 hergestellten Dispensern (Wirkstoff pro Dispenser):

a)
- 10 mg Chalcogran
- 70 mg cis-Verbenol
- 500 mg α-Pinen
- 1500 mg 2-Methyl-3-buten-2-ol

b) Zusammensetzung wie a), jedoch wurde jeweils unter der Falle Fichtenreisig aufgehäuft.

c)
- 50 mg Chalcogran
- 70 mg cis-Verbenol
- 1500 mg 2-Methyl-3-buten-2-ol

d)
- 250 mg Chalcogran
- 70 mg cis-Verbenol
- 1500 mg 2-Methyl-3-buten-2-ol

**Fangergebnisse**

| Formulierung | Zahl der gefangenen Käfer | |
|---|---|---|
| | P.chalcographus | Nemosoma |
| a) | 3 265 | 540 |
| b) | 11 555 | 630 |

| | | |
|---|---|---|
| c) | 6 305 | 595 |
| d) | 15 380 | 2 480 |

Das Ergebnis zeigt (Vergleich a)/b)), daß durch die Mitverwendung von Fichtenreisig eine drastische Verbesserung des Fangergebnisses erzielt werden kann. Gegenüber der noch besser wirksamen Formulierung d) ist vorteilhaft, daß weniger Chalcogran benötigt wird und die an sich unerwünschten Fänge von Nemosoma relativ geringer sind.

**Patentansprüche**

1. Mittel zur Anlockung von Borkenkäfern, dadurch gekennzeichnet, daß es als Lockstoff eine Kombination bestehend aus Chalcogran und cis-Verbenol und gegebenenfalls einer oder mehreren der nachstehend angegebenen Verbindungen enthält: Ipsdienol, Ipsenol, Lineatin, Frontalin, Brevicomin, Amitinol, α-Pinen, 1-Hexanol, 2-Methyl-3-buten-2-ol.

2. Mittel nach Anspruch 1 enthaltend Chalcogran, cis-Verbenol, Ipsdienol und Methylbutenol im Gewichtsverhältnis (1 bis 10) : (1 bis 10) : (0,5 bis 5) : (50 bis 500).

3. Mittel nach Anspruch 1, enthaltend Chalcogran, cis-Verbenol, Brevicomin und 1-Hexanol im Gewichtsverhältnis (1 bis 10) : (1 bis 10) . (1 bis 10) : (10 bis 100).

4. Verwendung von Mitteln nach Anspruch 1 bis 4 zur Anlockung von Borkenkäfern.

5. Verwendung von Mitteln nach Anspruch 1 bis 4, dadurch gekennzeichnet, daß die Lockstoffkomponenten in unterschiedlicher Kombination auf zwei oder mehrere Dispenser verteilt sind.

6. Verfahren zur Anlockung von Borkenkäfern, dadurch gekennzeichnet, daß als Lockstoff ein Mittel nach Anspruch 1 bis 4 dient.

7. Verfahren zur Anlockung von Borkenkäfern, dadurch gekennzeichnet, daß als Lockstoff ein Mittel nach Anspruch 1 bis 4, dessen Komponenten auf zwei oder mehrere Dispenser verteilt sind, dient.

8. Verfahren nach Anspruch 6 oder 7, dadurch gekennzeichnet, daß zusätzlich Fichtenreisig in der unmittelbaren Umgebung der Falle aufgehäuft wird.

9. Verfahren nach Anspruch 8, dadurch gekennzeichnet, daß das Fichtenreisig unter der Falle aufgehäuft wird.

**Claims**

1. Substance for attracting bark beetles, characterized in that it contains, as an attractant, a combination consisting of chalcogran and cis-verbenol and optionally one or more of the following compounds: ipsidienol, ipsenol, lineatin, frontalin, brevicomin, amitinol, α-pinen, 1-hexanol, 2-methyl-3-buten-2-ol.

2. Substance as claimed in claim 1 containing chalcogran, cis-verbenol, ipsdienol and methyl butenol in a weight ratio of (1 to 10) : (1 to 10) : (0.5 to 5) : (50 to 500).

3. Substance as claimed in claim 1 containing chalcogran, cis-verbenol, brevicomin and 1-hexanol in a weight ratio of (1 to 10) : (1 to 10) : (1 to 10) : (10 to 100).

4. Use of substances as claimed in claims 1 to 4 for attracting bark beetles.

5. Use of substances as claimed in claims 1 to 4 characterized in that the components of the attractant are divided between two or more dispensers in various combinations.

6. Process for attracting bark beetles characterized in that a substance as claimed in claims 1 to 4 serves as the attractant.

7. Process for attracting bark beetles characterized in that a substance as claimed in claims 1 to 4 serves as the attractant whereof the components are divided between two or more dispensers.

8. Process as claimed in claims 6 or 7 characterized in that additionally spruce twigs are amassed in the immediate vicinity of the trap.

9. Process as claimed in claim 8 characterized in that the spruce twigs are amassed under the trap.

**Revendications**

1. Produit pour appâter les coléoptères de l'écorce, caractérisé en ce qu'il contient en tant qu'appât une combinaison consistant en Chalcogran et cis-Verbénol et, le cas échéant, un ou plusieurs des composés suivants : Ipsdienol, Ipsenol, Lineatin, Frontalin, Brevicomin, Amitinol, alpha-pinène, 1-hexanol, 2-méthyl-3-butène-2-ol.

2. Produit selon la revendication 1, caractérisé en ce qu'il contient du Chalcogran, du cis-Verbénol, de l'Ipsdienol et du méthylbuténol dans des proportions relatives en poids de (1 à 10) : (1 à 10) : (0,5 à 5) : (50 à 500).

3. Produit selon la revendication 1, contenant du Chalcogran, du cis-Verbénol, du Brevicomin et du 1-hexanol dans des proportions relatives en poids de (1 à 10) : (1 à 10) : (1 à 10) : (10 à 100).

4. Utilisation de produits selon les revendications 1 à 4 pour appâter les coléoptères de l'écorce.

5. Utilisation de produits selon les revendications 1 à 4, caractérisée en ce que les composants de l'appât sont répartis en combinaisons variées dans deux ou plusieurs dispositifs de délivrance.

6. Procédé pour appâter les coléoptères de l'écorce, caractérisé en ce que l'on utilise en tant qu'appât un produit selon les revendications 1 à 4.

7. Procédé pour appâter les coléoptères de l'écorce, caractérisé en ce que l'on utilise en tant qu'appât un produit selon les revendications 1 à 4, dont les composants sont répartis dans deux ou plusieurs dispositifs de délivrance.

8. Procédé selon la revendication 6 ou 7, caractérisé en ce que l'on entasse en outre des brindilles de pin dans le voisinage immédiat des pièges.

9. Procédé selon la revendication 8, caractérisé en ce que l'on entasse les brindilles de pin au-dessous des pièges.

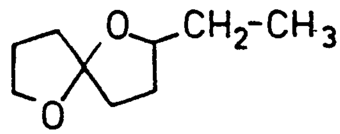

Chalcogran

2-Ethyl-1,6-dioxaspiro[4.4]nonan

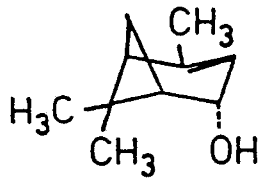

cis-Verbenol

4,6,6-Trimethyl-bicyclo[3.1.1]hept-3-en-2-ol

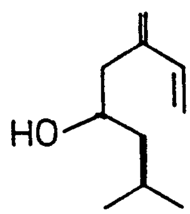

Ipsdienol

2-Methyl-6-methylen-2.7-octadien-4-ol

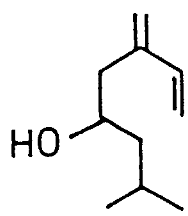

Ipsenol

2-Methyl-6-methylen-7-octen-4-ol

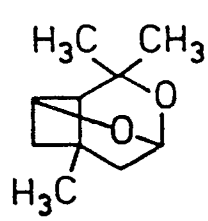

Lineatin

3,3,7-Trimethyl-4,9-dioxatricyclo[3.3.1.0 $^{2,7}$]nonan

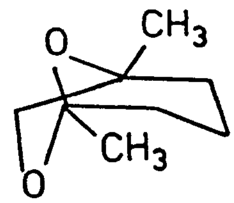

Frontalin

1,5-Dimethyl-6.8-dioxabicyclo[3.2.1]octan

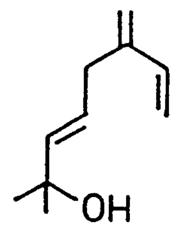

Amitinol

2-Methyl-6-methylen-3,7-octadien-2-ol

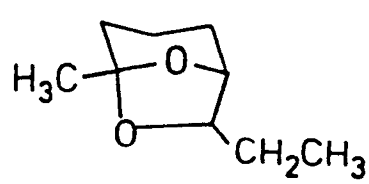

Brevicomin

7-Ethyl-5-methyl-6,8-dioxabicyclo[3.2.1]octan